# EUROPÄISCHE PATENTSCHRIFT

(11) **EP 3 046 817 B1**
(45) Veröffentlichungstag und Bekanntmachung des Hinweises auf die Patenterteilung: **05.08.2020**
(21) Anmeldenummer: 14827435.0
(22) Anmeldetag: 19.12.2014
(51) Int. Cl.: B60T 13/66, B60T 8/17

(54) **SCHIENENFAHRZEUGVERBAND**
RAIL VEHICLE COMBINATION
CONVOI DE VÉHICULES FERROVIAIRES

(30) Priorität: 20.12.2013 DE 102013226966
(43) Veröffentlichungstag der Anmeldung: 27.07.2016
(73) Patentinhaber: Siemens Mobility GmbH, 81739 München (DE)
(72) Erfinder: WIESAND, Manfred, 90559 Burgthann (DE)
(86) Internationale Anmeldenummer: PCT/EP2014/078753
(87) Internationale Veröffentlichungsnummer: WO 2015/091955

(56) Entgegenhaltungen:
- EP-A2- 0 152 300
- EP-A2- 1 266 814
- WO-A1-2004/054840

## Beschreibung

Die Erfindung betrifft einen Schienenfahrzeugverband umfassend eine erste Triebzugeinheit und zumindest eine zweite Triebzugeinheit, die jeweils eine Antriebseinrichtung und eine Bremseinrichtung aufweisen, wobei die Bremseinrichtungen der zumindest zwei Triebzugeinheiten jeweils mehrere Bremseinheiten aufweisen. Ein Schienenfahrzeugverband dieser Gattung wurde in den Dokumenten WO-2004/054840-A1, EP-1266814-A1 und EP-0152300-A2 beschrieben.

In heutigen Bahnverkehrssystemen werden vermehrt Triebzugeinheiten eingesetzt, die je nach Bedarf an Kapazität auf bestimmten Strecken zur Bildung eines Schienenfahrzeugverbands miteinander gekoppelt werden und zu einem autarken Einzelbetrieb voneinander wieder entkoppelt werden können. Bei einem Bremsvorgang im gekoppelten Zustand werden die Bremseinrichtungen der einzelnen Triebzugeinheiten gleichzeitig aktiviert.

Der Erfindung liegt die Aufgabe zugrunde, bei einem derartigen Schienenfahrzeugverband eine flexible Ausnutzung der Bremseinrichtungskapazitäten der gekoppelten Triebzugeinheiten zu erreichen.

Hierzu wird ein Schienenfahrzeugverband mit den Merkmalen des Anspruchs 1 und ein Verfahren zum Bremsen eines Schienenfahrzeugverbands mit den Merkmalen des Anspruchs 8 vorgeschlagen. Hierdurch kann bezüglich einer Bremswirkungsverteilung eine besonders hohe Flexibilität in der Nutzung der Bremseinrichtungen der gekoppelten Triebzugeinheiten erreicht werden.

Das übergeordnete Bremswirkungsverwaltungssystem weist zweckmäßigerweise zumindest eine Steuereinheit auf, die mit zumindest einem Verteilungsalgorithmus ausgestattet ist. Diese Steuereinheit weist gegenüber einer Steuervorrichtung einer Bremseinrichtung in einer Triebzugeinheit, wobei diese Steuervorrichtung zur Steuerung der Bremseinheiten dieser Triebzugeinheit vorgesehen ist, eine übergeordnete Rolle auf. Beispielweise kann die Steuereinheit des Bremswirkungsverwaltungssystems einer Ebene einer Steuerungshierarchie zugeordnet werden, die den Ebenen der einzelnen Triebzugeinheiten übergeordnet ist. Die Steuereinheit des Bremswirkungsverwaltungssystems ist insbesondere dazu vorgesehen, einen Betrieb der Steuervorrichtungen zu koordinieren. Hierzu steht die Steuereinheit daten- und/oder steuerungstechnisch mit den Steuervorrichtungen der einzelnen Triebzugeinheiten in Wirkverbindung. Die Funktion der Steuereinheit des Bremswirkungsverwaltungssystems kann außerdem von zumindest einer der Steuervorrichtungen übernommen werden, die mit einem entsprechenden Verteilungsalgorithmus ausgestattet ist.

Die Verteilung der Bremswirkung auf Bremseinheiten kann insbesondere auf der Basis von Daten erfolgen, die von den Bremseinheiten an das Bremswirkungsverwaltungssystem übermittelt werden. Das Bremswirkungsverwaltungssystem ist zweckmäßigerweise mit einer Schnittstelle ausgestattet, die diese Daten empfängt, wobei ein Auswertemodul des Verteilungsalgorithmus zur Auswertung dieser Daten vorgesehen ist. Diese Daten können z.B. Informationen über eine Verfügbarkeit und/oder eine maximal erbringbare Bremswirkung enthalten.

Unter einer "Triebzugeinheit" soll ein als Triebwagen ausgebildetes Schienenfahrzeug oder eine Zusammenstellung von Fahrzeugeinheiten verstanden werden, die zu einem antriebstechnisch autarken Betrieb geeignet ist. Hierzu sind die Antriebseinrichtungen der Triebzugeinheiten zweckmäßigerweise jeweils für einen autarken Betrieb der Triebzugeinheiten nach Trennung des Schienenfahrzeugverbands geeignet. Insbesondere bildet die Zusammenstellung eine betrieblich untrennbare Einheit.

Unter einer Verteilung einer "Bremswirkung" kann eine Verteilung einer Bremskraft, einer Bremsleistung, eines Bremsmoments oder einer anderweitigen Kenngröße verstanden werden, die für eine Bremswirkung repräsentativ ist. Ein Verteilungsvorgang entspricht zweckmäßigerweise einer Zuteilung einer Teilbremswirkung einer gesamten Bremswirkung durch das Bremswirkungsverwaltungssystem zu Bremseinheiten der Triebzugeinheiten. Die Steuervorrichtung der Bremseinrichtung der entsprechenden Triebzugeinheit, zu welcher eine Bremseinheit gehört, der eine Teilbremswirkung zugeteilt wird, steuert diese Bremseinheit zur Erbringung dieser Teilbremswirkung.

Unter dem "gekoppelten Zustand" des Schienenfahrzeugverbands soll ein betrieblicher Zustand verstanden werden, bei welchem er als zusammenhängende Zugeinheit betrieben werden kann. Dies kann z.B. dadurch erfolgen, dass der Schienenfahrzeugverband im gekoppelten Zustand einer in der fachmännischen Sprache genannten "Zugtaufe" unterliegt.

In jeder Triebzugeinheit weist die entsprechende Bremseinrichtung zumindest ein Bremssystem auf, welches als mechanisches Bremssystem oder generatorisches Bremssystem ausgebildet ist. In einer besonders vorteilhaften Ausbildung der Erfindung ist die Bremseinrichtung mit einem mechanischen und einem generatorischen Bremssystem ausgestattet. Das generatorische Bremssystem ist auf bekannte Weise zumindest teilweise von Komponenten der Antriebseinrichtung, insbesondere von Antriebsmotoren, gebildet.

Eine Bremseinheit der Bremseinrichtung kann ein vollständiges Bremssystem der Bremseinrichtung oder ein Untersystem dieses Bremssystems sein. Sind die Triebzugeinheiten jeweils als eine Zusammenstellung von Fahrzeugeinheiten ausgebildet, kann eine Bremseinheit außerdem als eine Struktur definiert werden, die einer Fahrzeugeinheit der Zusammenstellung zugeordnet ist. Es kann hierbei eine besonders effektive Bremswirkungsverteilung erreicht werden, wenn den Fahrzeugeinheiten der Zusammenstellung jeweils zumindest eine unterschiedliche Bremseinheit der jeweiligen Bremseinrichtung zugeordnet ist. Ist die Bremseinrichtung mit unterschiedlichen Bremssystemen ausgestattet und ist eine Fahrzeugeinheit der Zusammenstellung mit Komponenten verschiedener Bremssysteme unterschiedlicher Technik versehen, kann eine dieser Fahrzeugeinheit zugeordnete Bremseinheit als logischer, technikübergreifender Verbund dieser Komponenten definiert werden. Eine Bremseinheit kann demnach zu einer mechanischen und/oder generatorischen Bremsung beitragen.

In einer besonders bevorzugten Ausbildung der Erfindung wird vorgeschlagen, dass das Bremswirkungsverwaltungssystem dazu vorgesehen ist, eine Bremswirkungsverteilung für die Bremseinrichtung der zweiten Triebzugeinheit in Abhängigkeit von zumindest einem Bremsparameter der Bremseinrichtung der ersten Triebzugeinheit vorzunehmen. Hierdurch kann eine optimale, an Gegebenheiten der ersten Triebzugeinheit angepasste Bremswirkungsverteilung erreicht werden. Ein Bremsparameter einer Bremseinrichtung kann eine Verfügbarkeit der Bremseinrichtung, eine Verfügbarkeit von zumindest einer Bremseinheit der Bremseinrichtung, eine von zumindest einer Bremseinheit erbringbare Bremswirkung usw. sein.

In diesem Zusammenhang wird vorgeschlagen, dass das Bremswirkungsverwaltungssystem eine mit den Bremseinrichtungen der Triebzugeinheiten verbundene Datenschnittstelle aufweist, über welche Bremsparameter von mehreren, insbesondere sämtlichen Bremseinheiten der ersten und der zweiten Triebzugeinheit empfangbar sind, und mit einem Verteilungsalgorithmus ausgestattet ist, welcher dazu vorgesehen ist, auf der Basis der Bremsparameter zumindest diesen Bremseinheiten jeweils eine Teilbremswirkung zuzuteilen.

Als Bremsparameter einer Bremseinheit sind zweckmäßigerweise zumindest eine durch die Bremseinheit erbringbare Bremswirkung und eine abzubremsende Masse ausgebildet. Diese erbringbare Bremswirkung ist insbesondere eine Bremswirkung, die von der jeweiligen Bremseinheit im jeweils aktuellen Betriebspunkt erbringbar ist. Sie kann besonders vorteilhaft vorgegebene Kennlinien und/oder aktuellen Betriebsbedingungen, wie z.B. thermische Belastungen, berücksichtigen. Die Betriebsparameter der einzelnen Bremseinheiten werden vorzugsweise über die Datenschnittstelle vom Bremswirkungsverwaltungssystem gesammelt und durch dessen, den Verteilungsalgorithmus ausführende Steuereinheit ausgewertet. Dem Verteilungsalgorithmus liegt vorteilhafterweise ein Optimierungsverfahren zugrunde. Gemäß einer Ausführung kann der Verteilungsalgorithmus zum Optimieren einer Verschleißkenngröße vorgesehen sein. Dabei können mit hoher Priorität Teilbremswirkungen generatorischen Bremseinheiten zugeteilt werden, wobei Teilbremswirkungen mechanischen Bremseinheiten derart zugeteilt werden, dass eine möglichst gleichmäßige Belastung der mechanischen Bremseinheiten entsteht.

Außerdem kann - für mit einer Gleitschutzvorrichtung ausgestattete Bremseinheiten - als Bremsparameter dieser Bremseinheiten jeweils ein Betriebszustand der Gleitschutzvorrichtung ausgebildet sein. Dies ist insbesondere bei einer Ausführung des Verteilungsalgorithmus von Vorteil, dem eine Haftwertausnutzungsoptimierung zugrunde liegt. Dabei können die zuzuteilenden Teilbremswirkungen zum Minimieren des ausgenutzten Haftwerts berechnet werden, wobei die Bremseinheiten vorzugsweise bis zu einer definierbaren Haftwertgrenze beaufschlagt werden. Der Betriebszustand kann im einfachsten Fall durch die Meldungen "aktiv" oder "inaktiv" charakterisiert werden.

In diesem Zusammenhang wird vorgeschlagen, dass der Verteilungsalgorithmus dazu vorgesehen ist, bei inaktiven Gleitschutzvorrichtungen in den Triebzugeinheiten eine erste Haftwertgrenze für die Berechnung der zuzuteilenden Teilbremswirkungen zu berücksichtigen und bei zumindest einer aktiven Gleitschutzvorrichtung eine zweite Haftwertgrenze für die Berechnung der zuzuteilenden Teilbremswirkungen zu berücksichtigen, die kleiner als die erste Haftwertgrenze ist.

In einer besonders vorteilhaften Ausführung der Erfindung wird vorgeschlagen, dass das Bremswirkungsverwaltungssystem dazu vorgesehen ist, bei einem Fehlbetrieb der Bremseinrichtung der ersten Triebzugeinheit zumindest ein Teil einer zu kompensierenden Bremswirkung wenigstens einer Bremseinheit der zweiten Triebzugeinheit zuzuteilen. Hierdurch kann ein mit der fehlerhaften Bremseinrichtung auszuführender Bremsvorgang vorteilhaft von der zumindest einen Bremseinheit der zweiten Triebzugeinheit unterstützt werden. Wird die zu kompensierende Bremswirkung auf Bremseinheiten der ersten Triebzugeinheit und Bremseinheiten der zweiten Triebzugeinheit verteilt, kann eine die Bremseinrichtungen schonende Kompensation einer fehlenden Bremswirkung erreicht werden.

Unter einer zu kompensierenden Bremswirkung soll eine Bremswirkung verstanden werden, die aufgrund des Fehlbetriebs gegenüber einem fehlerfreien Betrieb verloren ist.

Eine Bremswirkungskompensation kann außerdem besonders schonend und mittels eines einfachen Verteilungsalgorithmus erreicht werden, wenn das Bremswirkungsverwaltungssystem dazu vorgesehen ist, bei einem vollständigen Ausfall einer Bremseinheit der Bremseinrichtung der ersten Triebzugeinheit die zu kompensierende Bremswirkung auf die übrigen Bremseinheiten der Triebzugeinheiten gleichmäßig zu verteilen. Eine ausgefallene Bremseinheit bedarf grundsätzlich keiner gesonderten Behandlung durch das Bremswirkungsverwaltungssystem, da dieser Fall durch die Meldung einer erbringbaren Bremswirkung, die null beträgt, abgedeckt werden kann.

In einer vorteilhaften Weiterbildung der Erfindung wird vorgeschlagen, dass die Bremseinrichtungen der zumindest zwei Triebzugeinheiten jeweils eine Steuervorrichtung aufweisen, die zumindest zwei Triebzugeinheiten jeweils ein leittechnisches System umfassen, wobei die leittechnischen Systeme im gekoppelten Zustand des Schienenfahrzeugverbands miteinander verbunden sind, und das Bremswirkungsverwaltungssystem zumindest von den über die leittechnischen Systeme miteinander verbundenen Steuervorrichtungen gebildet ist. Hierdurch kann auf den Einbau einer für die Funktion des Bremswirkungsverwaltungssystems speziell vorgesehenen, von den Steuervorrichtungen getrennten Einheit verzichtet werden. Dabei kann eine bestehende Vernetzung der Steuervorrichtungen mit den zugeordneten Bremseinheiten der jeweiligen Triebzugeinheit sowie die bestehenden leittechnischen Systeme vorteilhaft ausgenutzt werden. Dies kann z.B. besonders einfach erfolgen, indem zumindest eine der Steuervorrichtungen mit einem Verteilungsalgorithmus programmiert ist. Ferner kann eine vorteilhafte Redundanz im Hinblick auf einen Ausfall einer der Steuervorrichtungen erreicht werden.

Ferner betrifft die Erfindung ein Verfahren zum Bremsen eines Schienenfahrzeugverbands umfassend eine erste Triebzugeinheit und zumindest eine zweite Triebzugeinheit, die jeweils eine Antriebseinrichtung und eine Bremseinrichtung aufweisen, wobei die Bremseinrichtungen der zumindest zwei Triebzugeinheiten jeweils mehrere Bremseinheiten aufweisen.

Es wird vorgeschlagen, dass
- im gekoppelten Zustand des Schienenfahrzeugverbands ein den Bremseinrichtungen übergeordnetes, mit diesen in Verbindung stehendes Bremswirkungsverwaltungssystem gebildet wird,
- durch das Bremswirkungsverwaltungssystem eine Bremswirkung auf Bremseinheiten der zumindest zwei Triebzugeinheiten verteilt wird und
- ein Bremsvorgang gemäß der Bremswirkungsverteilung ausgeführt wird.

Zu den vorteilhaften Wirkungen des vorgeschlagenen Verfahrens wird auf die obigen Ausführungen bezüglich des Schienenfahrzeugverbands verwiesen.

Es werden Ausführungsbeispiele der Erfindung anhand der Zeichnungen erläutert. Es zeigen:
- Figur 1:: einen Schienenfahrzeugverband mit zwei Triebzugeinheiten in einer schematischen Seitenansicht,
- Figur 2:: eine auf Bremseinheiten des Verbands erfolgende Bremswirkungsverteilung in einem normalen Betrieb,
- Figur 3:: eine auf Bremseinheiten des Verbands erfolgende Bremswirkungsverteilung in einem fehlerhaften Betrieb,
- Figur 4:: eine alternative, auf Bremseinheiten des Verbands erfolgende Bremswirkungsverteilung in einem normalen Betrieb und
- Figur 5:: eine alternative, auf Bremseinheiten des Verbands erfolgende Bremswirkungsverteilung in einem fehlerhaften Betrieb.

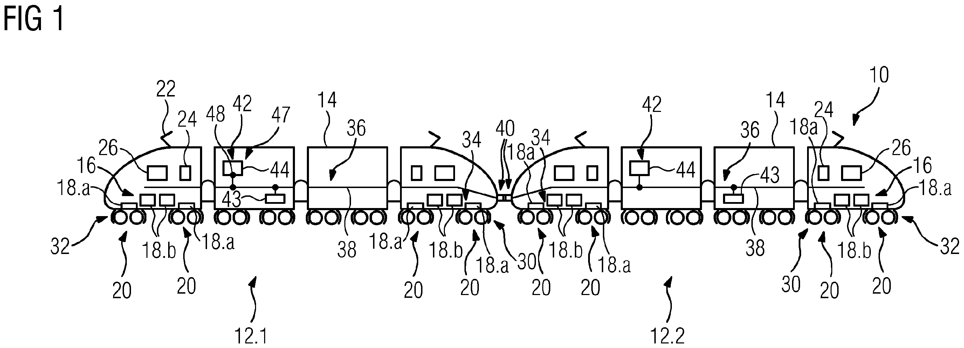

Figur 1 zeigt einen Schienenfahrzeugverband 10 in einer schematischen Seitenansicht. In der betrachteten Ausführung ist der Schienenfahrzeugverband 10 als eine Zusammenstellung von zwei Triebzugeinheiten 12.1 und 12.2 ausgebildet. Weitere Ausführungen mit mehr als zwei Triebzugeinheiten sind ebenfalls denkbar.

Insbesondere ist jede Triebzugeinheit 12 für die Beförderung von Passagieren ausgelegt. Jede Triebzugeinheit 12 weist eine Anzahl von miteinander gekoppelten, als Wagen ausgebildeten Fahrzeugeinheiten 14 auf, die jeweils mit einem Fahrgastraum ausgestattet sind. Außerdem ist jede Triebzugeinheit 12 als antriebstechnisch autarker Triebzug ausgebildet. Hierdurch können die Triebzugeinheiten 12.1, 12.2 voneinander getrennt und separat voneinander betrieben werden. Ein Kopplung bzw. Entkopplung der Triebzugeinheiten 12.1, 12.2 zur Bildung bzw. Trennung des Schienenfahrzeugverbands 10 erfolgt abhängig von einem Bedarf an einer Kapazität zur Beförderung von Fahrgästen.

Jede Triebzugeinheit 12 weist mindestens eine Antriebseinrichtung 16 auf, die einen autarken Antrieb der jeweiligen Triebzugeinheit 12 ermöglicht. Dabei ist die Antriebseinrichtung 16 der ersten Triebzugeinheit 12.1 zumindest im getrennten Zustand des Schienenfahrzeugverbands 10 unabhängig von der Antriebseinrichtung 16 der zweiten Triebzugeinheit 12.2 und umgekehrt. In der betrachteten Ausführung weist die Antriebseinrichtung 16 der Triebzugeinheiten 12.1, 12.2 Antriebskomponenten 18.a, 18.b auf. Die Antriebskomponenten 18.a sind jeweils als Antriebsmotor ausgebildet, der in einem Drehgestell 20 der jeweiligen Triebzugeinheit 12 untergebracht ist. Die Antriebskomponenten 18.b sind jeweils als Leistungsversorgungseinheit, insbesondere in der Form eines Wechselrichters, ausgebildet, die einen zugeordneten Antriebsmotor mit elektrischer Leistung versorgt.

Gemäß der gezeigten Ausführung sind die Antriebskomponenten 18 der Antriebseinrichtung 16 in zwei Fahrzeugeinheiten 14 konzentriert angeordnet. Dabei handelt es sich jeweils um einen Kopfwagen. Eine Konzentration der Antriebseinrichtung 16 in einem oder mehreren Mittelwagen ist ebenfalls denkbar. Eine weitere Ausführung, bei welcher die Komponenten 18 der Antriebseinrichtung 16 über mehrere Fahrzeugeinheiten 14 verteilt sind, ist auch möglich. Die Kopfwagen in der betrachteten Ausführung sind jeweils als Triebwagen umfassend einen Fahrgastraum ausgebildet. Eine alternative Ausbildung als Triebfahrzeug, welches für den Transport von Passagieren nicht vorgesehen ist, ist denkbar.

Zur Versorgung der Antriebseinrichtung 16 mit elektrischer Energie sind in jeder Triebzugeinheit jeweils zumindest ein Stromabnehmer 22, ein Hauptschalter 24 und eine Einspeiseschaltung 26 zur Umwandlung einer mittels des Stromabnehmers 22 abgegriffenen netzseitigen Gleich- oder Wechselspannung (jeweils stark schematisch dargestellt) vorgesehen. Die Einspeiseschaltung 26 speist einen nicht näher dargestellten Zwischenkreis, von welchem die Antriebseinrichtung 16 und ggf. eine Hilfsbetriebsversorgung eine elektrische Energie beziehen.

Jede Triebzugeinheit 12 ist ferner mit einer Bremseinrichtung 30 ausgestattet. Jede Bremseinrichtung 30 ist für einen autarken Betrieb der jeweiligen Triebzugeinheit 12 im getrennten Zustand des Schienenfahrzeugverbands 10 ausgelegt. Insbesondere erfüllen die Bremseinrichtungen 30 jeweils sämtliche vorgeschriebene Sicherheitserfordernisse, sodass jede Triebzugeinheit 12.1 bzw. 12.2 hinsichtlich dieser Erfordernisse für einen von weiteren Triebzugeinheiten 12 getrennten Betrieb zugelassen ist.

Jede Bremseinrichtung 30 weist zumindest zwei Bremssysteme 32, 34 auf, die sich bezüglich einer Bremstechnologie voneinander unterscheiden. In der betrachteten Ausführung ist ein erstes Bremssystem 32 als eine Reibungsbremse ausgebildet. Als zweites Bremssystem 34 ist eine generatorische Bremse vorgesehen, welche zumindest von Bestandteilen der jeweiligen Antriebseinrichtung 16, insbesondere von den Antriebskomponenten 18.a, gebildet ist. Der Aufbau und die Funktionsweise einer Reibungsbremse und einer generatorischen Bremse bei einem Schienenfahrzeug sind allgemein bekannt und werden hier nicht näher erläutert.

Die Triebzugeinheiten 12 sind außerdem jeweils mit einem leittechnischen System 36 ausgestattet. Dieses sieht insbesondre eine datentechnische und steuerungstechnische Vernetzung von zu steuernden Endfunktionskomponenten und entsprechenden Steuereinheiten der jeweiligen Triebzugeinheit 12 mittels zumindest eines Bussystems 38 vor. Dies ist ebenfalls allgemein bekannt und wird hier nicht näher erläutert. Eine standardisierte Architektur für eine zugweite Kommunikation ist beispielsweise im TCN-Standard (oder "Train Communication Network") beschrieben.

Im gekoppelten Zustand des Schienenfahrzeugverbands 10 erfolgt eine datentechnische und steuertechnische Kupplung beider leittechnischer Systeme 36 der Triebzugeinheiten 12.1, 12.2 miteinander. Insbesondere werden hierzu die jeweiligen Bussysteme 38 mittels Schnittstellen 40 miteinander gekoppelt. Diese sind insbesondere im Koppelbereich der Triebzugeinheiten 12 angeordnet. Insbesondere sind die Schnittstellen 40 jeweils in einer unter dem Begriff "Bugkupplung" genannten Kupplungseinheit der jeweiligen Triebzugeinheit 12.1 bzw. 12.2 angeordnet.

Die Bremseinrichtung 30 in jeder Triebzugeinheit 12 weist zumindest eine Bremssteuereinheit 42 auf, die zur Steuerung der jeweiligen Bremssysteme 32, 34 vorgesehen ist. Die Bremssteuereinheit 42 umfasst einen Satz von in den Fahrzeugeinheiten 14 verteilt angeordneten, lokalen Steuereinheiten 43 auf, die jeweils zur lokalen Steuerung von Bremskomponenten der Bremssysteme 32, 34 dienen. Der Übersichtlichkeit der Figur halber ist in dieser von diesen Steuereinheiten 43 lediglich eine lokale Steuereinheit in einer Fahrzeugeinheit 14 gezeigt. Ferner weist die Bremssteuereinheit 42 eine zentrale, gegenüber den lokalen Steuereinheiten 43 übergeordnete Steuervorrichtung 44 auf, die mit diesen über das Bussystem 38 verbunden ist.

Mittels der lokalen Steuereinheiten 43 und der zentralen Steuervorrichtung 44 wird ein hierarchisches Bremssteuersystem geschaffen, welches im Folgenden erläutert wird. Die Beschreibung bezieht sich allgemein auf eine Triebzugeinheit 12, findet jedoch für beide Triebzugeinheiten 12.1, 12.2 des betrachteten Ausführungsbeispiels Anwendung.

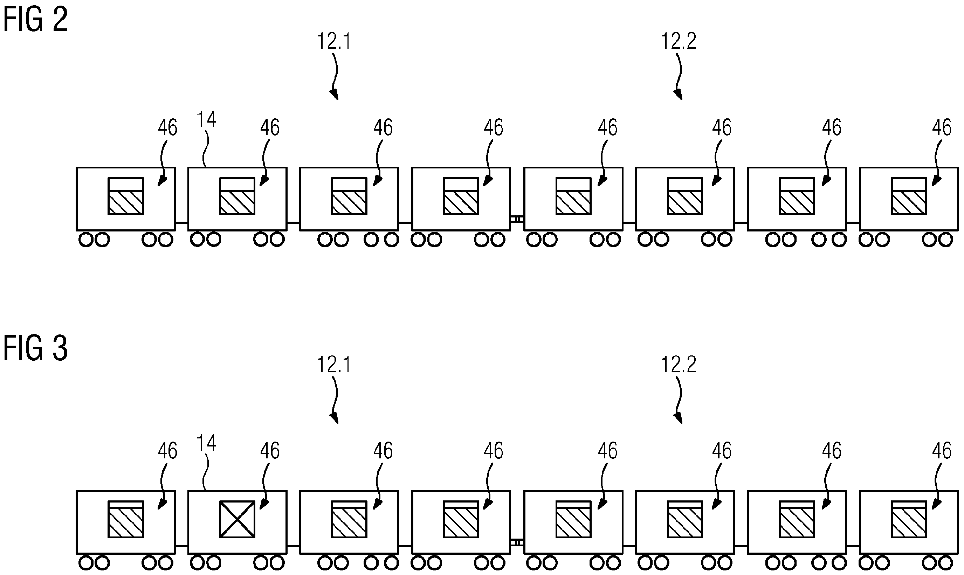

In der Triebzugeinheit 12 wird jeder Fahrzeugeinheit 14 eine Bremseinheit 46 zugeordnet (siehe Figur 2). Diese ist von den lokalen Bremskomponenten der Bremssysteme 32, 34 und der lokalen Steuereinheit 43 bzw. den lokalen Steuereinheiten 43 dieser Fahrzeugeinheit 14 gebildet. Die Zuordnung erfolgt unabhängig von der lokalen Ausstattung der Fahrzeugeinheiten 14, insbesondere unabhängig davon, ob die entsprechende Fahrzeugeinheit 14 Antriebskomponenten 18.a, 18.b der Antriebseinrichtung 16 oder nur Komponenten des Bremssystems 32 aufweist. Eine Fahrzeugeinheit 14 ist mit Komponenten des Bremssystems 32 und/oder des Bremssystems 34 ausgestattet, wobei die zugeordnete Bremseinheit 46 zur mechanischen bzw. generatorischen Bremsung vorgesehen ist. Der Satz von Bremseinheiten 46 bildet eine untere Ebene eines hierarchischen Bremssteuersystems, welches in einer darüber angeordneten, mittleren Ebene die zentrale Steuervorrichtung 44 aufweist.

Eine Funktion der zentralen Steuervorrichtung 44 besteht insbesondere darin, Daten, die von den lokalen Steuereinheiten 43 zur Verfügung gestellt werden, zu sammeln. Diese Daten basieren auf Kenngrößen, die in den Fahrzeugeinheiten 14 erfasst werden, und sind zumindest für einen Ist-Zustand der jeweiligen Bremseinheit 46 repräsentativ. Beispielsweise können die Daten für eine momentan, abhängig von lokalen Gegebenheiten durch die Bremseinheit 46 erbringbare Bremswirkung repräsentativ sein.

In der zentralen Steuervorrichtung 44 ist ein Verteilungsalgorithmus implementiert, welcher auf der Basis einer vorgegebenen, von der Bremseinrichtung 30 zu erbringenden Soll-Bremswirkung und der gesammelten Daten diese Soll-Bremswirkung in Teilbremswirkungen teilt, die jeweils einer unterschiedlichen Bremseinheit 46 der Triebzugeinheit zugeordnet werden.

Im gekoppelten Zustand des Schienenfahrzeugverbands 10 erfolgt durch die Kopplung der jeweiligen Bussysteme 38 eine Verknüpfung der Bremseinrichtungen 30 - insbesondere der Bremssteuereinheiten 42 - beider Triebzugeinheiten 12.1, 12.2. Diese physikalische Verknüpfung wird dahingehend genutzt, dass eine den Bremssteuereinheiten 42 übergeordnete, verbandweite Steuerebene bereitgestellt wird. Dies erfolgt mittels der zentralen Steuervorrichtungen 44, die jeweils dazu vorbereitet sind, im Zusammenwirken über die Bussysteme 38 diese verbandweite, obere Steuerebene zu bilden.

Bezüglich der Bremswirkungsverteilung wird von den Steuervorrichtungen 44, die über die miteinander gekoppelten leittechnischen Systeme 36 miteinander verbunden sind, ein verbandweites Bremswirkungsverwaltungssystem 47 gebildet. Die Funktion des Bremswirkungsverwaltungssystems 47 ist insbesondere die Verteilung einer Bremswirkung auf die Bremseinheiten 46 der Triebzugeinheiten 12.1, 12.2. In der betrachteten Ausführung ist die Steuervorrichtung 44 der ersten Triebzugeinheit 12.1 als Steuereinheit des Bremswirkungsverwaltungssystems 47 ausgebildet. Hierzu ist sie mit einem entsprechenden Verteilungsalgorithmus ausgestattet. In einer alternativen Ausführung ist denkbar, dass diese Funktion von der Steuervorrichtung 44 der zweiten Triebzugeinheit 12.1 oder von beiden Steuervorrichtungen 44 im Zusammenwirken ausgeführt wird.

Die Steuereinheit des Bremswirkungsverwaltungssystems 47 wertet - bei der Ausführung eines Programms gemäß dem Verteilungsalgorithmus - Bremsparameter aus, die von den Bremseinheiten 46 beider Triebzugeinheiten 12.1, 12.2 mitgeteilt werden. Diese Daten werden über eine Datenschnittstelle 48 empfangen (siehe Figur 1). Als Betriebsparameter einer Bremseinheit 46 sind insbesondere eine momentan - d.h. im aktuellen Betriebszeitpunkt - erbringbare Bremswirkung und eine abzubremsende Masse ausgebildet. Ist die Bremseinheit 46 mit einer Gleitschutzvorrichtung ausgebildet (in den Figuren nicht gezeigt), ist ein weiterer Betriebsparameter dieser Bremseinheit 46 als Betriebszustand der Gleitschutzvorrichtung ausgebildet.

Ein besonderer Anwendungsfall wird nun anhand der Figuren 2 und 3 beschrieben. Diese zeigen die Fahrzeugeinheiten 14 der Triebzugeinheiten 12.1, 12.2. In jeder Fahrzeugeinheit 14 wird mittels eines Balkens die Teilbremswirkung dargestellt, die von der zentralen Steuervorrichtung 44 der jeweiligen Triebzugeinheit 12.1 bzw. 12.2 zu der entsprechenden Bremseinheit 46 zugeordnet wird. Es wird im betrachteten Beispiel der Figur 2 angenommen, dass im Normalfall in jeder Triebzugeinheit 12 die Soll-Bremswirkung unter den Bremseinheiten 46 gleichmäßig verteilt wird.

In der in Figur 3 gezeigten Betriebssituation wird von einer Bremseinheit 46 in der ersten Triebzugeinheit 12.1 der zentralen Steuervorrichtung 44 gemeldet, dass keine Bremswirkung z.B. aufgrund eines technischen Ausfalls erbringbar ist. Darauf erfolgt eine erneute Verteilung der von beiden Bremseinrichtungen 30 zu erbringenden Soll-Bremswirkung auf die Bremseinheiten 46 des Schienenfahrzeugverbands 10. Dies erfolgt mittels des Bremswirkungsverwaltungssystems 47, welches auf der Basis der Daten aller Bremseinheiten 46 des Schienenfahrzeugverbands 10 die Teilbremswirkungen diesen Bremseinheiten 46 zuordnet. Die Sammlung der Daten sowie die Verteilung und Zuordnung der Teilbremswirkungen können durch eine der zentralen Steuervorrichtungen 44 oder durch ein Zusammenwirken derselben und mittels einer über die miteinander gekoppelten Bussysteme 38 stattfindenden Datenübertragung erfolgen. Durch die verbandweite Verteilung kann ein verbandweiter Ausgleich der fehlenden, von der defekten Bremseinheit 46 nicht erbringbaren Bremswirkung auf Bremseinheiten 46 des gesamten Schienenfahrzeugverbands 10 erfolgen. Diese zu kompensierende Bremswirkung wird in der betrachteten Ausführung auf die funktionstüchtigen Bremseinheiten 46 des gesamten Schienenfahrzeugverbands 10 gleichmäßig verteilt. Bei einer unvorteilhaften Einschränkung des Ausgleichs auf die Triebzugeinheit 12.1, in welcher sich der Fehlbetrieb ereignet, würde im Vergleich zu der Verteilung gemäß Figur 3 eine höhere Beanspruchung der Bremseinheiten 46 dieser Triebzugeinheit 12.1 erfolgen.

In den Darstellungen der Figuren 2 und 3 wird zwischen einer mechanischen und generatorischen Bremsung nicht unterschieden.

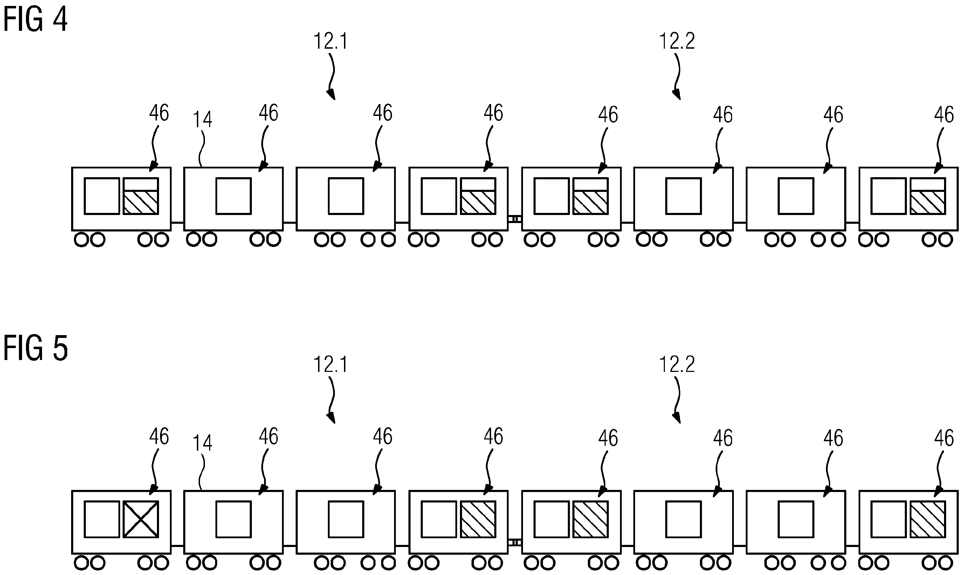

Die Figuren 4 und Figur 5 zeigen in einem weiteren Anwendungsfall wiederum mit Hilfe von Balken die Verteilung der Teilbremswirkungen unter den Bremseinheiten 46, wobei für die Kopfwagen, die jeweils mit Antriebskomponenten 18 der Antriebseinrichtung 16 ausgestattet sind, zwischen einer mechanischen Anteil (jeweils linker Balken) und einem generatorischen Anteil (jeweils rechter Balken) unterschieden wird.

Wie in Figur 4 für einen normalen Betriebsfall dargestellt erfolgt bei einer Zuordnung der Teilbremswirkungen eine Priorisierung der verschleißarmen generatorischen Komponenten der Bremseinrichtung 30. Im dargestellten Fall wird in jeder Triebzugeinheit 12 eine gleichmäßige Verteilung der Soll-Bremswirkung auf die generatorischen Komponenten der Bremseinheiten 46 vorgenommen.

In der in Figur 5 dargestellten Betriebssituation wird von der Bremseinheit 46 des ersten Kopfwagens der ersten Triebzugeinheit 12.1 gemeldet, dass keine Bremswirkung von den generatorischen Komponenten der Bremseinheit 46 z.B. aufgrund eines technischen Ausfalls erbringbar ist. Darauf erfolgt eine erneute Verteilung der von beiden Bremseinrichtungen 30 zu erbringenden Soll-Bremswirkung auf die Bremseinheiten 46 des Schienenfahrzeugverbands 10. Dies erfolgt in der verbandweiten Steuerebene mittels des Bremswirkungsverwaltungssystems 47, welches auf der Basis der Daten aller Bremseinheiten 46 des Schienenfahrzeugverbands 10 die Teilbremswirkungen diesen Bremseinheiten 46 zuordnet. Dabei erfolgt weiterhin eine Priorisierung der generatorischen Komponenten der Bremseinheiten 46. Die Sammlung der Daten sowie die Verteilung und Zuordnung der Teilbremswirkungen können durch eine der zentralen Steuervorrichtungen 44 oder durch ein Zusammenwirken derselben und mittels einer über die miteinander gekoppelten Bussysteme 38 stattfindenden Datenübertragung erfolgen. Durch die verbandweite Verteilung kann ein verbandweiter Ausgleich der fehlenden, von der defekten Bremseinheit 46 nicht erbringbaren Bremswirkung auf die für eine generatorische Bremsung geeigneten Bremseinheiten 46 des gesamten Schienenfahrzeugverbands 10 erfolgen. Bei einer unvorteilhaften Einschränkung des Ausgleichs auf die Triebzugeinheit 12.1, in welcher sich der Fehlbetrieb ereignet, wären im Vergleich zu der Verteilung gemäß Figur 5 eine höhere Beanspruchung der anderen, mit generatorischen Komponenten ausgestatteten Bremseinheiten 46 und/oder eine Aktivierung der mechanischen Komponenten von Bremseinheiten 46 dieser Triebzugeinheit 12.1 notwendig.

Im betrachteten Ausführungsbeispiel liegt dem Verteilungsalgorithmus zusätzlich eine Haftwerkausnutzungsoptimierung zugrunde. Dabei können die zuzuteilenden Teilbremswirkungen zum Minimieren des ausgenutzten Haftwerts berechnet werden, wobei die Bremseinheiten 46 vorzugsweise bis zu einer definierten Haftwertgrenze beaufschlagt werden. Meldet keine der Bremseinheiten 46, die mit einer Gleitschutzvorrichtung ausgestattet sind, ein aktiver Betriebszustand der zugeordneten Gleitschutzvorrichtung, so berücksichtigt der Verteilungsalgorithmus eine erste definierte Haftwertgrenze. Meldet zumindest eine dieser Bremseinheiten 46 einen aktiven Betriebszustand der zugeordneten Gleitschutzvorrichtung, wird vom Verteilungsalgorithmus eine zweite definierte, niedrigere Haftwertgrenze berücksichtigt. So kann die Verteilung einer Bremswirkung durch den Verteilungsalgorithmus einfach an schlechte Schienenverhältnisse angepasst werden.

## Patentansprüche

1. Schienenfahrzeugverband umfassend eine erste Triebzugeinheit (12.1) und zumindest eine zweite Triebzugeinheit (12.2), die jeweils eine Antriebseinrichtung (16) und eine Bremseinrichtung (30) aufweisen, wobei die Bremseinrichtungen (30) der zumindest zwei Triebzugeinheiten (12.1, 12.2) jeweils mehrere Bremseinheiten (46) aufweisen,
**dadurch gekennzeichnet, dass**
- im gekoppelten Zustand ein den Bremseinrichtungen (30) übergeordnetes, mit diesen in Verbindung stehendes Bremswirkungsverwaltungssystem (47) gebildet ist, das dazu vorgesehen ist, eine Bremswirkung auf Bremseinheiten (46) der zumindest zwei Triebzugeinheiten (12.1, 12.2) zu verteilen,
- das Bremswirkungsverwaltungssystem (47) eine mit den Bremseinrichtungen (30) der Triebzugeinheiten (12.1, 12.2) verbundene Datenschnittstelle (48) aufweist, über welche Bremsparameter von mehreren Bremseinheiten (46) der Triebzugeinheiten (12.1, 12.2) empfangbar sind,
- das Bremswirkungsverwaltungssystem (47) mit einem Verteilungsalgorithmus ausgestattet ist, welcher dazu vorgesehen ist, auf der Basis der Bremsparameter den Bremseinheiten (46) der Triebzugeinheiten (12.1, 12.2) jeweils eine Teilbremswirkung zuzuteilen,
- Bremseinheiten (46) mit einer Gleitschutzvorrichtung ausgestattet sind, wobei als Bremsparameter dieser Bremseinheiten (46) jeweils ein Betriebszustand der Gleitschutzvorrichtung ausgebildet ist, und
- der Verteilungsalgorithmus dazu vorgesehen ist, bei inaktiven Gleitschutzvorrichtungen in den Triebzugeinheiten (12.1, 12.2) eine erste Haftwertgrenze für die Berechnung der zuzuteilenden Teilbremswirkungen zu berücksichtigen, und bei zumindest einer aktiven Gleitschutzvorrichtung eine zweite Haftwertgrenze für die Berechnung der zuzuteilenden Teilbremswirkungen zu berücksichtigen, die kleiner als die erste Haftwertgrenze ist.

2. Schienenfahrzeugverband nach Anspruch 1,
**dadurch gekennzeichnet, dass**
die Triebzugeinheiten (12.1, 12.2) jeweils als eine Zusammenstellung von Fahrzeugeinheiten (14) ausgebildet sind, wobei den Fahrzeugeinheiten (14) jeweils zumindest eine unterschiedliche Bremseinheit (46) der jeweiligen Bremseinrichtung (30) zugeordnet ist.

3. Schienenfahrzeugverband nach Anspruch 1 oder 2,
**dadurch gekennzeichnet, dass**
das Bremswirkungsverwaltungssystem (47) dazu vorgesehen ist, eine Bremswirkungsverteilung für die Bremseinrichtung (30) einer zweiten Triebzugeinheit (12.2) in Abhängigkeit von zumindest einem Bremsparameter der Bremseinrichtung (30) einer ersten Triebzugeinheit (12.1) vorzunehmen.

4. Schienenfahrzeugverband nach Anspruch 1,
**dadurch gekennzeichnet, dass**
als Bremsparameter einer Bremseinheit (46) zumindest eine durch die Bremseinheit (46) erbringbare Bremswirkung und eine abzubremsende Masse ausgebildet sind.

5. Schienenfahrzeugverband nach Anspruch 3,
**dadurch gekennzeichnet, dass**
das Bremswirkungsverwaltungssystem (47) dazu vorgesehen ist, bei einem Fehlbetrieb der Bremseinrichtung (30) der ersten Triebzugeinheit (12.1) zumindest ein Teil einer zu kompensierenden Bremswirkung wenigstens einer Bremseinheit (46) der zweiten Triebzugeinheit (12.2) zuzuteilen.

6. Schienenfahrzeugverband nach Anspruch 5,
**dadurch gekennzeichnet, dass**
das Bremswirkungsverwaltungssystem (47) dazu vorgesehen ist, bei einem vollständigen Ausfall einer Bremseinheit (46) der Bremseinrichtung (30) der ersten Triebzugeinheit (12.1) die zu kompensierende Bremswirkung auf die übrigen Bremseinheiten (46) der Triebzugeinheiten (12.1, 12.2) gleichmäßig zu verteilen.

7. Schienenfahrzeugverband nach einem der vorhergehenden Ansprüche,
**dadurch gekennzeichnet, dass**
die Bremseinrichtungen (30) der zumindest zwei Triebzugeinheiten (12.1, 12.2) jeweils eine Steuervorrichtung (44) aufweisen, die zumindest zwei Triebzugeinheiten (12.1, 12.2) jeweils ein leittechnisches System (36) umfassen, wobei die leittechnischen Systeme (36) im gekoppelten Zustand miteinander verbunden sind, und das Bremswirkungsverwaltungssystem (47) zumindest von den über die leittechnischen Systeme (36) miteinander verbundenen Steuervorrichtungen (44) gebildet ist.

8. Verfahren zum Bremsen eines Schienenfahrzeugverbands (10) umfassend eine erste Triebzugeinheit (12.1) und zumindest eine zweite Triebzugeinheit (12.2), die jeweils eine Antriebseinrichtung (16) und eine Bremseinrichtung (30) aufweisen, wobei die Bremseinrichtungen (30) der zumindest zwei Triebzugeinheiten (12.1, 12.2) jeweils mehrere Bremseinheiten (46) aufweisen,
**dadurch gekennzeichnet, dass**
- im gekoppelten Zustand des Schienenfahrzeugverbands (10) ein den Bremseinrichtungen (30) übergeordnetes, mit diesen in Verbindung stehendes Bremswirkungsverwaltungssystem (47) gebildet wird,
- durch das Bremswirkungsverwaltungssystem (47) eine Bremswirkung auf Bremseinheiten (46) der zumindest zwei Triebzugeinheiten (12.1, 12.2) verteilt wird, wobei das Bremswirkungsverwaltungssystem (47) eine mit den Bremseinrichtungen (30) der Triebzugeinheiten (12.1, 12.2) verbundene Datenschnittstelle (48) aufweist, über welche Bremsparameter von mehreren Bremseinheiten (46) der Triebzugeinheiten (12.1, 12.2) empfangbar sind, das Bremswirkungsverwaltungssystem (47) mittels eines Verteilungsalgorithmus auf der Basis der empfangenen Bremsparameter den Bremseinheiten (46) der Triebzugeinheiten (12.1, 12.2) jeweils eine Teilbremswirkung zuteilt, wobei Bremseinheiten (46) mit einer Gleitschutzvorrichtung ausgestattet sind und als Bremsparameter dieser Bremseinheiten (46) jeweils ein Betriebszustand der Gleitschutzvorrichtung verwendet wird, und wobei der Verteilungsalgorithmus bei inaktiven Gleitschutzvorrichtungen in den Triebzugeinheiten (12.1, 12.2) eine erste Haftwertgrenze für die Berechnung der zuzuteilenden Teilbremswirkungen berücksichtigt, und bei zumindest einer aktiven Gleitschutzvorrichtung eine zweite Haftwertgrenze für die Berechnung der zuzuteilenden Teilbremswirkungen berücksichtigt, die kleiner als die erste Haftwertgrenze ist, und
- ein Bremsvorgang gemäß der Bremswirkungsverteilung ausgeführt wird.

## Claims

1. Rail vehicle combination comprising a first motor train unit (12.1) and at least a second motor train unit (12.2), each of which has a drive mechanism (16) and a brake mechanism (30), wherein the brake mechanisms (30) of the at least two motor train units (12.1, 12.2) each have a plurality of brake units (46),
**characterized in that**
- a braking effect management system (47) is formed in the coupled state, which management system is of a higher order than the brake mechanisms (30) and is connected thereto and is designed for distributing a braking effect to brake units (46) of the at least two motor train units (12.1, 12.2),
- the braking effect management system (47) comprises a data interface (48) connected to the brake mechanisms (30) of the motor train units (12.1, 12.2), via which interface braking parameters can be received from several brake units (46) of the motor train units (12.1, 12.2),
- the braking effect management system (47) is equipped with a distribution algorithm designed for allocating a partial braking effect to each of the brake units (46) of the motor train units (12.1, 12.2) on the basis of the braking parameters,
- brake units (46) are equipped with an anti-skid device, wherein an operating state of the anti-skid device is a braking parameter of each of these brake units (46), and
- the distribution algorithm is designed to, if the anti-skid devices in the motor train units (12.1, 12.2) are inactive, take a first limit of adhesion into consideration when calculating the partial braking effects to be allocated and, if at least one anti-skid device is active, take a second limit of adhesion into consideration when calculating the partial braking effects to be allocated, which second limit is lower than the first limit of adhesion.

2. Rail vehicle combination according to Claim 1,
**characterized in that**
the motor train units (12.1, 12.2) are each formed as a combination of vehicle units (14), wherein at least one different brake unit (46) of the respective brake mechanism (30) is allocated to each of the vehicle units (14).

3. Rail vehicle combination according to Claim 1 or 2,
**characterized in that**
the braking effect management system (47) is designed for implementing a braking effect distribution for the brake mechanism (30) of a second motor train unit (12.2) depending on at least one braking parameter of the brake mechanism (30) of a first motor train unit (12.1).

4. Rail vehicle combination according to Claim 1,
**characterized in that**
braking parameters of a brake unit (46) are at least a braking effect that can be applied by the brake unit (46) and a mass that must be braked.

5. Rail vehicle combination according to Claim 3,
**characterized in that**
the braking effect management system (47) is designed to, in the event of faulty operation of the brake mechanism (30) of the first motor train unit (12.1), allocate at least a portion of a braking effect to be compensated to at least one brake unit (46) of the second motor train unit (12.2).

6. Rail vehicle combination according to Claim 5,
**characterized in that**
the braking effect management system (47) is designed to, in the event of a complete failure of a brake unit (46) of the brake mechanism (30) of the first motor train unit (12.1), distribute the braking effect to be compensated uniformly to the remaining brake units (46) of the motor train units (12.1, 12.2) .

7. Rail vehicle combination according to one of the preceding claims,
**characterized in that**
the brake mechanisms (30) of the at least two motor train units (12.1, 12.2) each comprise a control device (44), each of the at least two motor train units (12.1, 12.2) comprises a control system (36), wherein the control systems (36) are interconnected in the coupled state, and the braking effect management system (47) is formed at least from the control devices (44) interconnected via the control systems (36).

8. Method for braking a rail vehicle combination (10) comprising a first motor train unit (12.1) and at least a second motor train unit (12.2), each of which has a drive mechanism (16) and a brake mechanism (30), wherein the brake mechanisms (30) of the at least two motor train units (12.1, 12.2) each have a plurality of brake units (46),
**characterized in that**
- a braking effect management system (47) is formed in the coupled state of the rail vehicle combination (10), which management system is of a higher order than the brake mechanisms (30) and is connected thereto,
- a braking effect is distributed by the braking effect management system (47) to brake units (46) of the at least two motor train units (12.1, 12.2), wherein the braking effect management system (47) comprises a data interface (48) connected to the brake mechanisms (30) of the motor train units (12.1, 12.2), via which interface braking parameters can be received from several brake units (46) of the motor train units (12.1, 12.2), the braking effect management system (47), by means of a distribution algorithm, allocates a partial braking effect to each of the brake units (46) of the motor train units (12.1, 12.2) on the basis of the received braking parameters, wherein brake units (46) are equipped with an anti-skid device, and an operating state of the anti-skid device is a braking parameter of each of these brake units (46), and wherein the distribution algorithm, if the anti-skid devices in the motor train units (12.1, 12.2) are inactive, takes a first limit of adhesion into consideration when calculating the partial braking effects to be allocated and, if at least one anti-skid device is active, takes a second limit of adhesion into consideration when calculating the partial braking effects to be allocated, which second limit is lower than the first limit of adhesion,
- a braking procedure is implemented according to the braking effect distribution.

## Revendications

1. Rame de véhicule ferroviaire, comprenant une première unité (12.1) automotrice et au moins une deuxième unité (12.2) automotrice, qui ont chacune un dispositif (16) de traction et un dispositif (30) de frein, les dispositifs (30) de frein des au moins deux unités (12.1, 12.2) automotrices ayant chacun plusieurs unités (46) de frein,
**caractérisée en ce que**
- à l'état attelé, il est formé un système (47) de gestion de l'action de freinage supérieur hiérarchiquement aux dispositifs (30) de frein, en liaison avec ceux-ci et prévu pour répartir une action de freinage entre des unités (46) de frein des au moins deux unités (12.1, 12.2) automotrices,
- le système (47) de gestion de l'action de freinage a une interface (48) de données, qui est reliée aux dispositifs (30) de frein des unités (12.1, 12.2) automotrices et par laquelle des paramètres de freinage de plusieurs unités (46) de frein des unités (12.1, 12.2) automotrices peuvent être reçus,
- le système (47) de gestion de l'action de freinage est équipé d'un algorithme de répartition prévu pour affecter, sur la base des paramètres de freinage, aux unités (46) de frein des unités (12.1, 12.2) automotrices, respectivement une action partielle de freinage,
- des unités (46) de frein sont équipées d'un système d'anti-glissement, un état de fonctionnement du système d'anti-glissement étant constitué en paramètre de freinage de ces unités (46) de frein, et
- l'algorithme de répartition est prévu pour, si les systèmes d'anti-glissement dans les unités (12.1, 12.2) automotrices sont inactifs, prendre en compte une première valeur limite d'adhérence pour le calcul des actions de freinage partielles à attribuer et, si au moins un système d'anti-glissement est actif, pour prendre en compte une deuxième valeur limite d'adhérence pour le calcul des actions de freinage partielles à attribuer, qui est plus petite que la première valeur limite d'adhérence.

2. Rame de véhicule ferroviaire suivant la revendication 1,
**caractérisée en ce que**
les unités (12.1, 12.2) automotrices sont constituées chacune sous la forme d'une combinaison d'unités (14) de véhicule, au moins une unité (46) de frein différente du dispositif (30) de frein respectif étant associée respectivement aux unités (14) de véhicule.

3. Rame de véhicule ferroviaire suivant la revendication 1 ou 2,
**caractérisée en ce que**
le système (47) de gestion de l'action de freinage est prévu pour effectuer une répartition de l'effet de freinage pour le dispositif (30) de frein d'une deuxième unité (12.2) automotrice en fonction d'au moins un paramètre de freinage du dispositif (30) de frein d'une première unité (12.1) automotrice.

4. Rame de véhicule ferroviaire suivant la revendication 1,
**caractérisée en ce que**
au moins l'action de freinage pouvant être apportée par l'unité (46) de frein et une masse à freiner sont constitués en paramètre de freinage d'une unité (46) de frein.

5. Rame de véhicule ferroviaire suivant la revendication 3,
**caractérisée en ce que**
le système (47) de gestion de l'action de freinage est prévu pour affecter, lorsque le dispositif (30) de frein fonctionne de manière défectueuse, à la première unité (12.1) automotrice, au moins une partie d'un effet de freinage à compenser d'au moins une unité (46) de frein de la deuxième unité (12.2) automotrice.

6. Rame de véhicule ferroviaire suivant la revendication 5,
**caractérisée en ce que**
le système (47) de gestion de l'action de freinage est prévu pour, si une unité (46) de frein du dispositif (30) de freinage de la première unité (12.1) automotrice est défaillante complètement, répartir uniformément l'action de freinage à compenser entre les autres unités (46) de frein des unités (12.1, 12.2) automotrices.

7. Rame de véhicule ferroviaire suivant l'une des revendications précédentes,
**caractérisée en ce que**
les dispositifs (30) de frein des au moins deux unités (12.1, 12.2) automotrices ont chacune un système (44) de commande, les au moins deux unités (12.1, 12.2) automotrices comprennent chacune un système (36) technique de conduite, les systèmes (36) techniques de conduite étant reliés entre eux à l'état attelé et le système (47) de gestion de l'action de freinage étant formé au moins des systèmes (44) de commande reliés entre eux par les systèmes (36) techniques de conduite.

8. Procédé de freinage d'une rame (10) de véhicule ferroviaire, comprenant une première unité 12.1) automotrice et au moins une deuxième unité (12.2) automotrice, qui ont chacune un dispositif (16) de traction et un dispositif (30) de frein, les dispositifs (30) de frein des au moins deux unités (12.1, 12.2) automotrices ayant chacun plusieurs unités (46) de frein,
**caractérisé en ce que**
- à l'état attelé de la rame (10) de véhicule ferroviaire, on forme un système (47) de gestion de l'action de freinage supérieur hiérarchiquement aux dispositifs (30) de frein et en liaison avec ceux-ci,
- par le système (47) de gestion de l'action de freinage, on répartit une action de freinage entre les unités (46) de frein des au moins deux unités (12.1, 12.2) automotrices, le système (47) de gestion de l'action de freinage ayant une interface (48) de données, par laquelle des paramètres de freinage de plusieurs unités (46) de frein des unités (12.1, 12.2) automotrices peuvent être reçus, le système (47) de gestion de l'action de freinage attribuant, au moyen d'un algorithme de répartition sur la base des paramètres de freinage reçus, aux unités (46) de frein des unités (12.1, 12.2) automotrices, respectivement une action de freinage partielle, dans lequel des unités (46) de frein sont équipées d'un système d'anti-glissement et on utilise, comme paramètres de freinage de ces unités (46) de frein, respectivement un état de fonctionnement du système d'anti-glissement, et dans lequel l'algorithme de répartition prend en compte, lorsque des systèmes d'anti-glissement dans les unités (12.1, 12.2) automotrices sont inactifs, une première limite de valeur d'adhérence pour le calcul des actions de freinage partielles à attribuer et, si au moins un système d'anti-glissement est actif, tient compte d'une deuxième limite de valeur d'adhérence pour le calcul des actions de freinage partielles à attribuer, qui est plus petite que la première valeur limite d'adhérence, et
- on effectue une opération de freinage selon la répartition des actions de freinage.
